Europäisches Patentamt

European Patent Office

Office européen des brevets

(19)

(11) **EP 0 543 334 B1**

(12) **EUROPEAN PATENT SPECIFICATION**

(45) Date of publication and mention
of the grant of the patent:
**29.01.1997 Bulletin 1997/05**

(51) Int Cl.6: **H01H 33/02**

(21) Application number: **92119622.6**

(22) Date of filing: **17.11.1992**

(54) **Gas insulated switchgear**

Gasisolierte Schaltanlage

Installation de commutation à gaz isolant

(84) Designated Contracting States:
**CH DE FR LI SE**

(30) Priority: **18.11.1991 JP 301542/91**

(43) Date of publication of application:
**26.05.1993 Bulletin 1993/21**

(73) Proprietor: **HITACHI, LTD.**
**Chiyoda-ku, Tokyo 101 (JP)**

(72) Inventors:
• **Utsumi, Tomoaki, Asahicho Apato B402**
  **Hitachi-shi (JP)**
• **Ishikawa, Toshio**
  **Hitachi-shi (JP)**
• **Iwaasa, Shuzo**
  **Hitachi-shi (JP)**
• **Endo, Fumihiro**
  **Hitachi-shi (JP)**
• **Yamagiwa, Tokio**
  **Hitachi-shi (JP)**

(74) Representative:
**Strehl Schübel-Hopf Groening & Partner**
**Maximilianstrasse 54**
**80538 München (DE)**

(56) References cited:
**EP-A- 0 066 298**      **DE-A- 3 634 946**
**DE-A- 4 007 337**

## Description

### FIELD OF THE INVENTION AND RELATED ART STATEMENT

The present invention relates to a gas insulated switchgear according to the first part of claim 1.

A conventional gas insulated switchgear of the above type includes a grounded metal container filled with an insulating gas such as $SF_6$ gas, in which a conductor applied with a higher voltage is supported in an insulation manner by an insulator spacer. In order to improve a dielectric strength, in such conventional gas insulated switchgear, the insulator spacer is made of epoxy resin base and an filler added to the base, which filler includes an alumina (dielectric constant of 9.3) or a mixture of an aluminium fluoride (dielectric constant of 5.0) and an alumina. According this, the dielectric constant of the insulator spacer is reduced, thereby preventing the deterioration of the dielectric strength due to an electrostatic concentration induced by the shape of the spacer.

In the conventional gas insulated switchgear, in order to improve the insulator spacer's own dielectric strength, it is made of a base material and a filler added thereto. However, it isn't considered that the filler makes a surface of the spacer rough to deteriorate the dielectric strength thereof. Namely, the added filler affects the surface roughness of the spacer. Accordingly, for example, the conductive foreign matters remained in the gas insulated switchgear and/or brought from the internal elements of the gas insulated switchgear can be readily attached to such rough surface of the spacer. As a result, the electrostatic concentration may be locally generated on such rough surface, thereby an dielectric breakdown is occurred.

A gas insulated switchgear including the features of the first part of claim 1 is disclosed in DE-A-3 634 946. A similar switchgear is described in EP-A-66298.

### OBJECT AND SUMMARY OF THE INVENTION

An object of the present invention is to provide a gas insulated switchgear which has a high dielectric strength even though there are conductive foreign matters.

The object is met by a gas insulated switchgear according to claim 1. Preferred embodiments are disclosed in the depending claims.

According to the present invention, since a surface roughness of the insulator is reduced, thereby preventing a local electrostatic concentration, the dielectric strength of the insulator can be improved even though the conductive foreign matters are adhered to the surface of the insulator.

### BRIEF DESCRIPTION OF THE DRAWINGS

Fig. 1 is a sectional view showing a gas insulated switchgear according to one embodiment of the present invention;

Fig. 2 is a graph showing a characteristic relationship between means diameter of the filler and the dielectric strength;

Fig. 3 is a schematic view showing an electrostatic concentration caused by the roughness of the insulator spacer's surface;

Fig. 4 is a sectional view showing a gas insulated switchgear according to another embodiment of the present invention;

Fig. 5 is a fragmentary sectional view of a gas insulated switchgear according to still another embodiment of the present invention;

Fig. 6 is a graph showing a relationship between the dielectric constant of the insulator spacer and the dielectric strength of the device;

Fig. 7 is a graph showing a relationship of the dielectric constants between the filler and the insulator spacer;

Fig. 8 is a graph showing a relationship of the heat transfer coefficients between the filler and the insulator spacer; and

Fig. 9 is a graph showing a dielectric constant and a heat transfer coefficient of the respective additives.

### DETAILED DESCRIPTION OF PREFERRED EMBODIMENTS

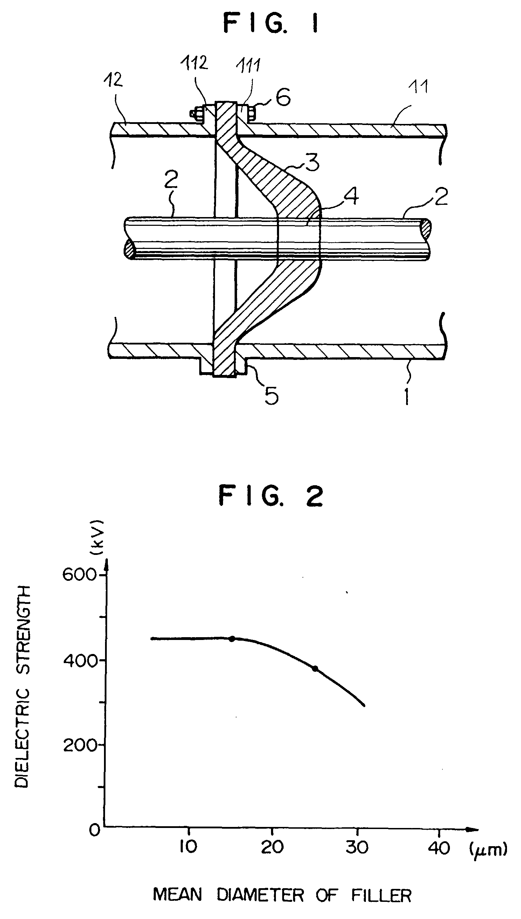

Referring to Fig. 1, a gas insulated switchgear according to one embodiment includes a grounded metal container 1 filled with an insulating gas such as $SF_6$ gas, conductors 2 applied with a higher voltage which are disposed within the container 1, a connector conductor 4 connecting the conductors 2 with each other, and a truncated cone shaped insulator spacer 3 in which the connector conductor 4 is embedded. The container consists of a pair of container halves 11 and 12, each of which is provided with a flange portion 111 and 121, respectively. The container halves 11 and 12 are so assembled together that an outer periphery of the insulator spacer 3 is interposed between the flange portions 111 and 121 and they are fixed together by means of bolts 6.

The insulator spacer 3 is made of an organic substance base, such as epoxy resin to which an inorganic filler, for example a mixture of an aluminium fluoride and an alumina, is added by 35 volume percentages to 60 volume percentages. The filler is added to the base so as to make a coefficient of thermal expansion of the spacer 3 closer to that of the connecting conductor 4. According this, a thermal concentration is reduced, thereby preventing the spacer 3 from cracking.

The mean diameter of the filler is 15 μm or less. As apparent from Fig. 2, the smaller a mean diameter of the filler becomes, the higher a dielectric strength becomes. When the mean diameter of the filler becomes 15 μm or less, the dielectric strength becomes saturated. Namely, in case that the filler of 15 μm or less mean diameter is added to the base of the spacer 3, a surface roughness of the spacer 3 becomes small and then the electrostatic concentration induced by the surface roughness of the spacer 3 is substantially decreased as compared with one induced by the conductive foreign matters attached to the spacer 3. The results shown in Fig. 2 are obtained under the condition where conductive foreign matters of some millimeters are adhered to a surface of the spacer 3 made of epoxy resin base to which a mixture of an aluminium fluoride and an alumina is added.

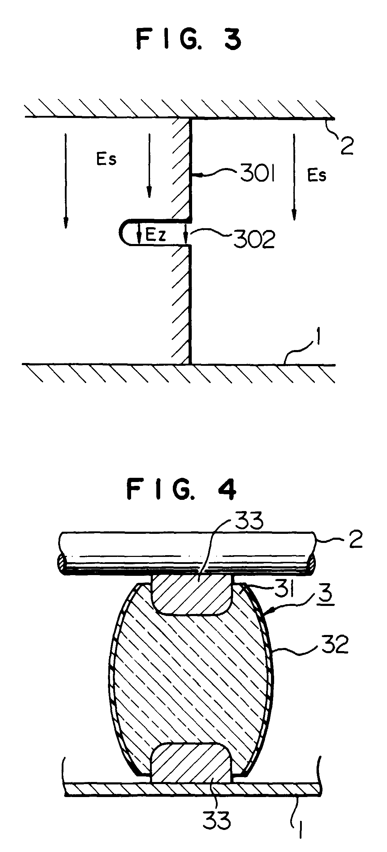

The explanation of the reduction of the electrostatic concentration mentioned above will be made with referring to Fig. 3. In case that the surface of the spacer 301 is rough, for example, there is a recess 302 on the surface of the spacer 301 due to lack of filler, a local electrostatic concentration Ez is induced in the recess 302. A flux density in the recess 302 is $e_0$ x Ez, which is substantially identical to a flux density $e_s$ x $e_0$ x Es in the spacer 301. The coefficients $e_0$ and $e_s$ represent dielectric constants of a space filled with the insulating gas and of the insulator spacer, respectively. It is found that an electric field Ez in the recess 302 is $e_s$ times higher than an electric field Es in the remaining part. Under such condition, if conductive foreign matters are adhered to around the recess 302, the electrostatic concentration induced by such foreign matters is superimposed upon the electrostatic concentration induced by the recess 302 so as to generate an extremely high electrostatic concentration which leads to a dielectric breakdown, thereby deteriorating the dielectric strength of the spacer 302. To the contrary, according to the present invention, the spacer 3 is so smooth as to eliminate the recesses from the surface thereof. Accordingly, the high electrostatic concentration can be eliminated, thereby improving the dielectric strength of spacer 3.

The filler isn't limited to a mixture of an aluminium fluoride ($AlF_3$) and an alumina ($Al_2O_2$). The filler may be an aluminium fluoride, a boron nitride (BN), or a mixture of an alumina and a boron nitride. Further, the insulator spacer isn't limited to the truncated cone shaped one. A barrel shaped insulator spacer or a disk shaped one may be employed. A frilled insulator spacer may be also employed, which has an improved dielectric strength.

Fig. 4 shows a barrel shaped insulator spacer 3 used in another embodiment of the present invention. The spacer 3 includes an epoxy resin base 31 to which an inorganic material filler is added, and an epoxy resin coating layer 32. The coating layer 32 make an outer surface of the insulator spacer 3 more smooth. Therefore, even though conductive foreign matters are adhered to the insulator spacer 3, an electrostatic concentration isn't occurred, thereby improving the dielectric strength of spacer 3. In this case, the filler whose mean

diameter is 15 μm or more can be employed. The spacer 3 further includes metal fittings 33 for mounting the spacer 3 to the container.

The process for molding the above-mentioned insulator spacer 3 will be described hereinafter.

A mould is coated at an inner surface thereof with an epoxy resin which serves as the coating layer 32. Thereafter, an epoxy resin to which a filler is added is injected into the mould.

In this embodiment, a silicon dioxide ($SiO_2$) can be employed as a filler so as to lower a cost of the spacer. Generally, since the silicon dioxide is readily deteriorated by $SF_6$ gas, it is hardly employed as a filler. However, in this embodiment, the coating layer prevents the spacer from being exposed to $SF_6$ gas, and then the silicon dioxide filler can be employed.

As described above, the dielectric strength of the spacer can be improved by reducing the surface roughness thereof. Further, in case that the surface roughness is maintained under the level of 15 μm in the term of an arithmetical mean deviation from the mean line of the profile, the dielectric strength is improved enough.

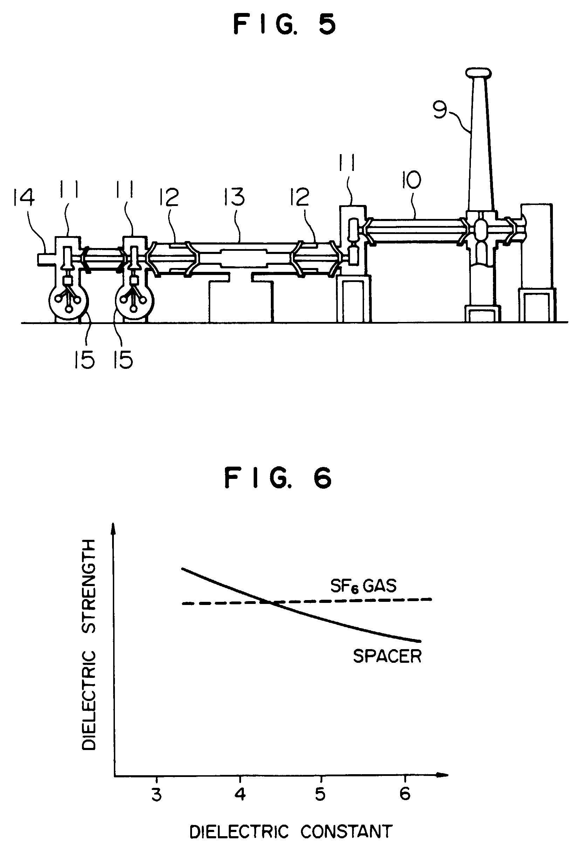

Fig. 5 show a gas insulated switchgear (GIS) according to the present invention. The GIS includes a bushing 9, a connecting bus 10, disconnecting device 11, a current transformer 12, a circuit breaker 13, a grounding device 14, and a main but 15. The bushing 9, and insulator cylinders of the disconnecting device 11 and the circuit breaker 13 employ the same structure as the above-mentioned insulator spacer.

Recently, the insulator spacer has been required to present a higher heat radiation performance. As a capacity of a power line is enlarged, a capacity of the gas insulated switchgear is also enlarged. A required current capacity becomes 8000A or more. The conductor applied with a high voltage is permitted to rise upto 105°C. If a temperature of the conductor rises beyond 110°C, an organic base material of the insulator spacer, such as epoxy resin, is thermally deteriorated. In case that the current capacity is 8000A or less, the device is dimensioned with taking an insulation performance into consideration. Therefore, there is a thermal allowance, and then a temperature of the conductor of a high voltage doesn't rise beyond 100°C even when a rated current is supplied thereto.

To the contrary, in case that the current capacity is 8000A or more, the device is dimensioned with taking a thermal performance into consideration. Therefore, a temperature of the conductor of a high voltage rises upto 105°C when a rated current is supplied thereto. In this case, since there is a connecting conductor of high voltage in the insulator spacer, it is readily heated upto a high temperature as compared with the remaining part. Therefore, it is required to make a heat radiation performance of the insulator spacer better than that of the insulating gas. Namely, it is required to enhance a heat transfer coefficient of the insulator spacer. To this end, it is preferable to add an inorganic material of high heat transfer coefficient, such as boron nitoride (BN), as a filler to an epoxy resin base. The heat transfer coefficient of the boron nitoride is high (about 60 W/m.°C) and the dielectric constant thereof is low (about 4.2). Therefore, the dielectric constant of the insulator spacer is reduced, thereby preventing the electrostatic concentration due to the shape of the insulator spacer from being occurred.

The reasons why the advantages in the di-electric strength and in the heat radiation performance of the insulator spacer are caused by reducing the di-electric constant of the insulator spacer and increasing the heat transfer coefficient thereof will be described hereinafter.

In connection with the improvement of the dielectric strength, as apparent from Fig. 6, the dielectric strength on the surface of the insulator spacer represented by a solid line is increased as the dielectric constant thereof is reduced. The broken line represents a dielectric strength of SF6 gas. In case that the dielectric constant of the insulator spacer is about 5.5, the dielectric strength of the insulator spacer is lower than that of SF6 gas. Accordingly, the dielectric strength of the whole device substantially depends on the dielectric strength on the surface of the insulator spacer. In order to ensure enough insulation distance, the device cannot help being enlarged. To the contrary, if the dielectric constant of the insulator spacer is reduced, the dielectric strength of the insulator spacer is increased. When the dielectric constant of the insulator spacer is about 5.0 or less, the dielectric strength of the insulator spacer becomes substantially equal or more than that of $SF_6$ gas, thereby improving the dielectric strength of the whole device without being enlarged.

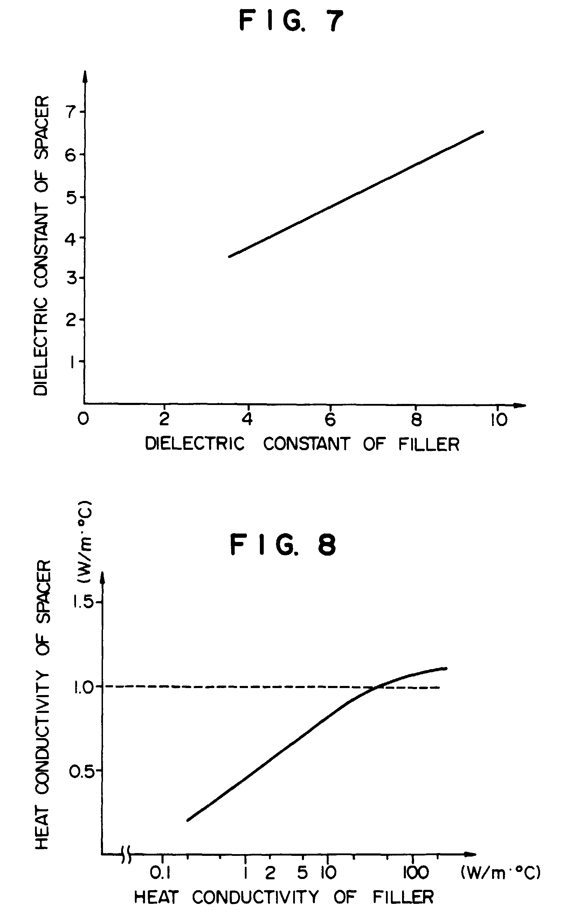

In order to reduce the dielectric constant of the insulator spacer, it is preferable to add a filler of low dielectric constant to the base material of the insulator spacer. The reasons will be described hereinafter with referring to Fig. 7.

Fig. 7 shows a relationship in the dielectric constant between the filler and the insulator spacer in case that the filler is added at 50 volume % to the epoxy resin base material of the insulator spacer. As apparent from Fig. 7, as the dielectric constant of the filler is reduced, the dielectric constant of the insulator spacer is linearly reduced. It is found that the dielectric constant of the filler is required to be maintained under 6.5 so as to reduce the dielectric constant of the insulator spacer below 5.0. The material of the filler of such low dielectric constant may be an aluminium fluoride (electric constant 5.0) or mica (dielectric constant 6.2).

In connection with the improvement of the heat radiation perforate, the explanation will be described hereinafter with reference to Fig. 1.

The conductors 2 and 4 generating the heat due to high power consumption are cooled by the natural convection heat transfer of the insulating gas. In this case, while the heat generated in the conductors 2 is directly transferred to the insulating gas, the heat generated in the conductor 4 is once transferred to the insulator spacer 3 and then transferred into the insulating gas through the surface of the insulator spacer 3.

If the insulator spacer 3 has a sufficient high heat conductivity, it can serve as a heat radiator, thereby the temperature of the conductor 4 is reduced lower than that of the insulator gas. To the contrary, if the heat conductivity of the insulator spacer 3 is low, the heat radiation performance of the insulator spacer 3 becomes lower than that of the insulating gas. Accordingly, the temperature of the conductor 4 becomes higher than that of the insulating gas.

The heat transfer coefficient $\underline{\alpha g}$ from the conductor 2 to the insulating gas varies according to the kinds, temperature, pressure of the insulating gas and the constitution of the device. In an ordinary gas insulated switchgear, since the temperature of the insulating gas is between the room temperature and 100°C, and the pressure thereof is between 1 atm and 5 atm, the heat conductivity $\alpha g$ is between 1 W/m·°C and 5 W/m·°C. To the contrary, the overall heat transfer coefficient $\alpha s$ from the conductor 4 to the insulating gas through the insulator spacer 3 is represented by the following equation.

$$\alpha s = \lambda_s \cdot \eta_f / H$$

Where $\lambda_s$ is a heat conductivity of the insulator spacer, $\underline{H}$ is a distance from inside to outside of the insulator spacer, and $\eta_f$ is a heat radiation coefficient of the insulator spacer, which is determined according to the shape and the heat conductivity of the spacer 3 and to the heat transfer coefficient of the insulating gas. The $\eta_f$ is always not greater than 1, and in the ordinary gas insulated switchgear, it is about 1. The $\underline{H}$ is usually between 0.1 m and 0.2 m. In order to make the heat radiation performance of the insulator spacer 3 higher than the heat transfer coefficient of the insulating gas, it is required to make the overall heat transfer coefficient higher than the heat transfer coefficient from the conductor 2 to the insulating gas, namely $\alpha s > \alpha g$. To this end, with taking into consideration the values of $\alpha s$, $\eta_f$, and $\underline{H}$, the $\lambda_s$ is required to be 1 W/m·°C or more.

The $\lambda_s$ is determined according to the heat conductivity $\lambda_m$ of the base material of the insulator spacer 3, the heat conductivity $\lambda_f$ of the filler added to the base material of the insulator spacer 3 and the amount $V_f$ of the added filler (volume %). Generally, the $\lambda_m$ is about 0.22 W/m·°C, and the $\lambda_f$ is usually larger than $\lambda_m$. Therefore the heat conductivity of the insulator spacer is enhanced by means of adding the filler.

The relationship between the heat conductivities of the filler and the insulator spacer will be described hereinafter with reference to Fig. 8. It shows the relationship therebetween in case that the filler is added by 50 volume %. As apparent from Fig. 8, the higher the heat conductivity $\lambda_f$ of the filler becomes, the higher the heat conductivity $\lambda_s$ of the insulator spacer becomes. However, in case that the heat conductivity $\lambda_f$ of the filler becomes 30 W/m·°C, the heat conductivity of the insulator spacer is saturated above 1 W/m·°C. This saturation is caused by the base resin material of the insulator spacer which serves as a thermal barrier.

Accordingly, in order to make the heat conductivity $\lambda_s$ of the insulator spacer 3 higher than 1 W/m·°C, the heat conductivity $\lambda_s$ of the filler must be higher than 30 W/m·°C. In this case, the overall heat transfer coefficient becomes higher than the heat transfer coefficient from the conductor 2 to the insulating gas, namely $\alpha s > \alpha g$. Accordingly, the heat radiation performance becomes greater than the heat transfer performance of the insulating gas.

As described above, if the heat conductivity of the filler is made to be higher than 30 W/m·°C, the heat radiation performance becomes greater than the heat transfer performance of the insulating gas, and then the temperature of the conductor 4 becomes lower than that of the conductor 2. Accordingly, even though the temperature of the conductor 2 rises upto 105°C, the temperatures of the conductor 4 and the insulator spacer 3 are maintained below 105°C, so that the insulator spacer 3 is prevented from being deteriorated.

Therefore, in case that the insulating material, whose dielectric constant is 5 or less and heat conductivity is 1 W/m·°C or more, is used for the insulator spacer 3, not only the dielectric strength of the insulator spacer 3 but also the heat radiation performance is enhanced, and then the current capacity of the gas insulated switchgear is enlarged over 8000A.

Such insulating material can be obtained by add the filler whose dielectric constant is 6.5 or less and heat conductivity is 30 W/m·°C or more to the organic base material such as epoxy resin.

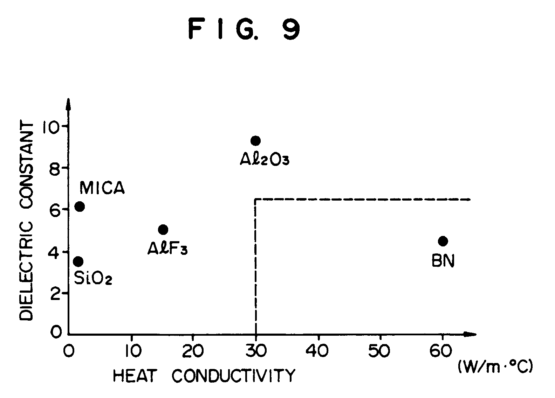

Fig. 9 shows the relationship the dielectric constant and the heat conductivity of the various additives. As apparent from Fig. 9, the filler which satisfies the above-mentioned requirements (6.5 or less dielectric constant and 30 W/m·°C or more heat conductivity) is boron nitride (BN). The mixture of boron nitride and alumina or aluminium fluoride can be employed as such filler.

According to the present invention, even though conductive foreign matters are adhered to the insulator member of the gas insulated switchgear, the dielectric strength thereof is prevented from being deteriorated, thereby obtaining a gas insulated switchgear of high voltage and large capacity and of high reliability.

## Claims

1. A gas insulated switchgear comprising:

   a container (1) which is filled with an insulating gas;
   a conductor (2) disposed within said container (1); and
   an insulator (3) for supporting said conductor (2) in said container (1), wherein said insulator includes an organic substance base and an inorganic material filler added to said base,

   characterised in that
   said insulator (3) has a smooth outer peripheral surface, wherein an arithmetical mean deviation from a mean line of a profile of said smooth outer peripheral surface is 15 μm or less.

2. The switchgear according to claim 1, wherein said filler has a mean diameter of 15 μm or less.

3. The switchgear according to claim 1 or 2, wherein said filler is atomised.

4. The switchgear according to any of claims 1 to 3, wherein said insulator (3) includes a coating layer (32) for providing the smooth outer peripheral surface.

5. The switchgear according claim 4, wherein said insulator (3) includes a main part (31) made of a base material and an inorganic material filler added to said base, and the coating layer (32) made of said base material.

6. The switchgear according to any of claims 1 to 5, wherein said filler includes an aluminium fluoride, or a mixture of an aluminium fluoride and an alumina, or a boron nitride or a mixture of a boron nitride and an inorganic material or a silica.

7. The switchgear according to any of claims 1 to 5, wherein said insulator (3) has a dielectric strength at an outer periphery thereof equal or greater than that of said insulating gas, and a heat transfer coefficient from said conductor (2) to said insulator (3) is greater than that from said conductor to said insulating gas.

8. The switchgear according to claim 6, wherein said filler has a dielectric constant less than 6.5 and a heat transfer coefficient greater than 30 W/m °C.

9. The switchgear according to claim 7 or 8, wherein said filler includes a boron nitride or a mixture of a boron nitride and an inorganic material.

## Patentansprüche

1. Gasisolierte Schaltanlage mit

   einem mit Isoliergas gefüllten Behälter (1);
   einem im Behälter (1) angeordneten Leiter (2); und
   einem den Leiter (2) im Behälter (1) tragenden Isolator (3), wobei der Isolator einen organischen Grundstoff und einen zu diesem Grundstoff hinzugefügten, anorganischen Füllstoff aufweist,

**dadurch gekennzeichnet**,

daß der Isolator (3) eine glatte, äußere Oberfläche aufweist, wobei die arithmetische mittlere Abweichung von einer Profil-Mittellinie der glatten äußeren Oberfläche 15 µm oder weniger beträgt.

2. Schaltanlage gemäß Anspruch 1, wobei der Füllstoff einen mittleren Durchmesser von 15 µm oder weniger besitzt.

3. Schaltanlage gemäß Anspruch 1 oder 2, wobei der Füllstoff pulverisiert ist.

4. Schaltanlage gemäß einem der Ansprüche 1 bis 3, wobei der Isolator (3) eine Deckschicht (32) zum Herstellen der glatten, äußeren Oberfläche aufweist.

5. Schaltanlage gemäß Anspruch 4, wobei der Isolator (3) einen Hauptteil (31), der aus einem Grundstoffmaterial und einem zu diesen Grundstoff hinzugefügten, anorganischen Füllstoff hergestellt ist, und eine Deckschicht (32), die aus dem Grundstoffmaterial hergestellt ist, aufweist.

6. Schaltanlage gemäß einem der Ansprüche 1 bis 5, wobei der Füllstoff ein Aluminiumfluorid oder eine Mischung aus einem Aluminiumfluorid und einem Aluminium, oder ein Bornitrid oder eine Mischung aus einem Bornitrid und einem anorganischen Material oder einem Silizium enthält.

7. Schaltanlage gemäß einem der Ansprüche 1 bis 5, wobei der Isolator (3) eine Durchschlagsfestigkeit an der äußeren Oberfläche gleich oder größer als die des Isoliergases besitzt und ein Wärmeübertragungskoeffizient vom Leiter (2) zum Isolator (3) größer als der vom Leiter zum Isoliergas ist.

8. Schaltanlage gemäß Anspruch 6, wobei der Füllstoff eine Dielektrizitätskonstante von weniger als 6.5 und einen Wärmeübertragungskoeffizient von größer als 30 W/m °C aufweist.

9. Schaltanlage gemäß Anspruch 7 oder 8, wobei der Füllstoff ein Bohrnitrid oder eine Mischung aus einem Bornitrid und einem anorganischem Material beinhaltet.

## Revendications

1. Disjoncteur à isolement gazeux comportant :

une enceinte (1) remplie d'un gaz isolant;
un conducteur (2) disposé à l'intérieur de ladite enceinte (1); et
un isolateur (3) pour supporter ledit conducteur (2) dans ladite enceinte (1), ledit isolateur comprenant une base en substance organique et une charge en matériau inorganique ajoutée à ladite base,

caractérisé en ce que

ledit isolateur (3) présente une surface périphérique extérieure lisse, dans lequel un écart moyen arithmétique par rapport à une ligne moyenne d'un profil de ladite surface périphérique extérieure lisse est 15 µm ou moins.

2. Disjoncteur selon la revendication 1, dans lequel ladite charge possède un diamètre moyen de 15 µm ou moins.

3. Disjoncteur selon la revendication 1 ou 2, dans lequel ladite charge est atomisée.

4. Disjoncteur selon l'une quelconque des revendications 1 à 3, dans lequel ledit isolateur (3) comprend une couche de revêtement (32) pour constituer la surface périphérique extérieure lisse.

5. Disjoncteur selon la revendication 4, dans lequel ledit isolateur (3) comprend une partie principale (31) réalisée en un matériau de base et une charge en matériau inorganique ajoutée à ladite base, et la couche de revêtement (32) constituée dudit matériau de base.

6. Disjoncteur selon l'une quelconque des revendications 1 à 5, dans lequel ladite charge comprend du fluorure d'aluminium, ou un mélange de fluorure d'aluminium et d'alumine, ou du nitrure de bore ou un mélange de nitrure de bore ou un mélange de nitrure de bore et d'un matériau inorganique ou de la silice.

7. Disjoncteur selon l'une quelconque des revendications 1 à 5, dans lequel ledit isolateur (3) possède une rigidité diélectrique à sa périphérie extérieure égale ou supérieure à celle dudit gaz isolant, et un coefficient de transfert thermique dudit conducteur (2) audit isolateur (3) supérieur à celui dudit conducteur audit gaz isolant.

8. Disjoncteur selon la revendication 6, dans lequel ladite charge possède une constante diélectrique inférieure à 6,5 et un coefficient de transfert thermique supérieur à 30 W/m°C.

9. Disjoncteur selon la revendication 7 ou 8, dans lequel ladite charge comprend du nitrure de bore ou un mélange de nitrure de bore et d'un matériau inor-
ganique.

# FIG. 1

# FIG. 2

DIELECTRIC STRENGTH (kV)

MEAN DIAMETER OF FILLER (μm)

# F I G. 3

# F I G. 4

# FIG. 5

# FIG. 6

# F I G. 7

# F I G. 8

# F I G. 9